# EUROPÄISCHE PATENTANMELDUNG

(11) **EP 4 007 009 A2**
(43) Veröffentlichungstag der Anmeldung: **01.06.2022**
(21) Anmeldenummer: 21205853.1
(22) Anmeldetag: 02.11.2021
(51) Int. Cl.: H01M 4/04, H01M 4/38, H01M 4/62, H01M 10/052

(54) **VERFAHREN ZUR HERSTELLUNG EINES HOMOGENISIERTEN GEMISCHS AUS KOHLENSTOFF, SCHWEFEL UND PTFE**

(30) Priorität: 25.11.2020 DE 102020131233
(71) Anmelder: NETZSCH Trockenmahltechnik GmbH, 95100 Selb (DE)
(72) Erfinder: Dambach, Regina, 63069 Offenbach (DE); Winter, Frank, 63165 Mühlheim (DE)

(57) **Zusammenfassung**

Die Erfindung betrifft ein Verfahren zur Herstellung eines homogenisierten Gemischs aus Kohlenstoff, Schwefel und PTFE, dadurch kennzeichnet, dass der Schwefel verflüssigt wird und dann der flüssige Schwefel zusammen mit dem Kohlenstoff ein erstes Mal vermahlen wird, so dass der flüssige Schwefel von den Poren der Kohlenstoffpartikel aufgesogen wird und mit den Kohlenstoffpartikeln ein bevorzugt pulverförmiges Komposit bildet, woraufhin PTFE zugegeben und dann das Gemisch aus dem Komposit und dem PTFE ein zweites Mal vermahlen und dadurch homogenisiert wird.

## Beschreibung

Die Erfindung betrifft ein Verfahren nach dem Oberbegriff des Anspruchs 1 und eine Vorrichtung zur Durchführung eines solchen Verfahrens nach dem Oberbegriff des Produktanspruchs.

### TECHNISCHER HINTERGRUND

Li-Schwefel-Akkus gelten derzeit als eine erfolgversprechende Option, um den steigenden Bedarf an deutlich leistungsfähigeren Akkus decken zu können, vgl. beispielsweise die DLR-Veröffentlichung "Lithium-Schwefel Batterien: Neue Entwicklungen und Erkenntnisse, N. Wagner, M. Schwan, B. Sievert, B. Milow, F. Warth, 04.12.2018, Werkstoff-Kolloquium 2018", abgerufen am 18.08.2020 vom Server der als DLR bekannten deutschen Gesellschaft für Luft- und Raumfahrt, unter www.dr.de¹.

Für solche Li-S-Akkus werden Li-S-Kathoden benötigt.

Die konventionelle Herstellung solcher Kathoden erfolgt durch Vermischen der Aktivmaterialien, einem leitfähigen Material und einem Binder mit einem Lösungsmittel zur Erstellung einer Slurry. Diese Paste wird auf eine Trägerfolie aufgetragen. Nach der Beschichtung muss die Trägerfolie getrocknet werden. Dies ist ein
¹ Volle Adresse:
https://www.dlr.de/wf/Portaldata/23/Resources/dokumente/werkstoff-kolloquium/wsk-2018/Wagner_-_Lithium-Schwefel_Batterien-Neue_Entwicklungen_und_Erkenntnisse.pdf energieintensiver Schritt und gilt als "Bottleneck" in der Produktion. Zudem ist das Lösungsmittel für die Kathodenerstellung umweltschädlich.

Aus diesem Grund wurde die Herstellung nach einem sogenannten "powder to roll" Prozess entwickelt. Der Prozess zeichnet sich dadurch aus, dass zunächst ein pulverförmiges Gemisch aus Schwefel (S) und Kohlenstoff gleichmäßig mit einem geeigneten Binder vermischt und dann kalandriert wird. Hierdurch wird das Pulver zu einem textilähnlichen Film ausgewalzt. Dieser Film kann dann auf eine Metallfolie, meist eine Alufolie, durch Walzen auflaminiert werden. Hiermit lässt sich durch Aufrollen oder Falten eine Li-S-Kathode der benötigten Form herstellen.

Bei dem bestehenden Verfahren werden die Ausgangsmaterialien, Schwefel als Aktivmaterial und Kohlenstoff als leitfähiger Zusatz trocken miteinander vermischt und in einer Mühle vermahlen. Anschließend wird das Gemisch in einen Ofen aufgegeben, so dass der Schwefel schmilzt und in die Poren des Kohlenstoffs aufgesogen wird. Dabei entstehen Kohlenstoff-Schwefel-Agglomerate, die erneut vermahlen werden müssen. Im nächsten Schritt wird das Pulver mit PTFE als Binder trocken vermischt und erneut vermahlen.

Um mit diesem Verfahren besonders hochwertige Kathoden herstellen zu können, ist es von großer Wichtigkeit, dass die Ausgangsmaterialien möglichst homogen in dem Partikelkollektiv verteilt sind.

Die bisherige, trockene Vermischung kann nicht kontinuierlich durchgeführt werden, sondern nur in einzelnen Batches.

### AUFGABE DER ERFINDUNG

Angesichts dessen hat es sich die Erfindung zur Aufgabe gemacht, ein Verfahren zu entwickeln, mit dem sich kontinuierlich und mit weniger Prozessschritten homogenere Mischungen als mithilfe der bisher eingesetzten Technik herstellen lassen.

### DIE ERFINDUNGSGEMÄSSE LÖSUNG

Die Lösung dieses Problems erfolgt durch ein Verfahren mit den Merkmalen des Anspruchs 1.

Es handelt sich um ein Verfahren zur Herstellung eines homogenisierten Gemischs aus Kohlenstoff, Schwefel und PTFE.

Das Verfahren zeichnet sich dadurch aus, dass der Schwefel verflüssigt wird und dann der flüssige Schwefel zusammen mit dem Kohlenstoff bzw. den Kohlenstoffpartikeln ein erstes Mal vermahlen wird. Das führt zu einer sehr gleichmäßigen Verteilung des Schwefels und des Kohlenstoffs. Der flüssige Schwefel wird dabei von den von der Oberfläche her zugänglichen Poren der Kohlenstoffpartikel aufgesogen. Das Aufsaugen wird durch den Mahlvorgang intensiviert, da immer wieder frische Flächen freigelegt werden, an denen die Kohlenstoffpartikel flüssigen Schwefel aufsaugen können. Der Schwefel bildet mit dem Kohlenstoff ein Komposit bzw. Kompositpartikel, das heißt einen Verbund aus Kohlenstoffpartikeln, meist pulverförmiger Natur, mit Schwefel, der in die Poren des jeweiligen Kohlenstoffpartikels eingedrungen ist.Wegen des simultan mit dem besagten Eindringen in die Poren ablaufenden Mahlvorgangs bleiben die einzelnen Kompositpartikel in dieser Phase vereinzelt und klumpen nicht.

Daraufhin wird partikelförmiges, bevorzugt in pulverförmiger Gestalt vorliegendes PTFE als Feststoff zugegeben.

Das Gemisch aus den Kompositpartikeln und den PTFE-Partikeln wird nun ein zweites Mal vermahlen.

Das zweite Vermahlen dient der intensiven Durchmischung bzw. Homogenisierung der Partikel des Gesamtgemischs bei gleichzeitiger Zerkleinerung aller Agglomerate, die sich im Zuge des Aufschmelzens ergeben haben mögen. Gleichzeitig bewirkt die sehr intensive Verwirbelung der Partikel des Gemischs, dass die Partikel schnell abkühlen und dann ihre Neigung zur Bildung neuer Agglomerationen deutlich abnimmt oder gänzlich zum Erliegen kommt.

### OPTIONALE VERFEINERUNGEN DER ERFINDUNG

Idealerweise kommen die aus Feststoff bestehenden Kohlenstoffpartikel in Gestalt von Rußpartikeln zum Einsatz. Rußpartikel bestehen aus Kohlenstoff mit einer ausgesprochen großen freien Oberfläche und eignen sich daher besonders gut zur Bildung eines Komposits mit dem Schwefel.

Besonders bevorzugt ist es, wenn der flüssige Schwefel über einen Injektor in die erste Mühle geführt wird.

Idealerweise wird der flüssige Schwefel bis zu seinem ersten Vermahlen mit den Kohlenstoffpartikeln in einem Temperaturbereich zwischen 110 °C und 220 °C geführt. Da die Viskosität flüssigen Schwefels eine signifikante Temperaturabhängigkeit zeigt, sollte der Schwefel einer Temperaturführung unterworfen werden, um im Wesentlichen immer mit der gleichen Viskosität in die Mühle bzw. die erste Mühle zu gelangen, so dass dort ein reproduzierbares Ergebnis entsteht.

Optional könnte diese Verfahren auch nur in einer Mühle durchgeführt werden. Hierzu werden Kohlenstoff und PTFE dosiert aufgegeben und der Schwefel über das Injektorsystem, das sei rein der Vollständigkeit halber angemerkt.

Besonders günstig ist es, wenn der Injektor mittels Stickstoff im Überdruck betrieben wird. Durch den Überdruck stellt sich eine gerichtete und hinreichend schnelle Strömung ein, die den flüssigen Schwefel sicher in die Mühle einträgt, ohne dass er sich übermäßig an den Innenwänden der die erste Mühle speisenden Verrohrung absetzt und dann nicht mehr zur feinen, gleichmäßigen Vermischung mit dem Kohlenstoff zur Verfügung steht. Dabei ist Stickstoff ein bevorzugtes Injektionsgas, da Stickstoff gegenüber Kohlenstoff und Schwefel inert und im Wesentlichen nicht toxisch ist.

Zur Unterstützung der Temperaturführung des Schwefels bedient man sich idealerweise der Temperierung des Injektionsgases. Man sorgt dafür, dass das Injektionsgas so aufgeheizt ist, dass der Schwefel während des Transports im Stickstoff (andere Inertgase wären denkbar) flüssig bleibt, nicht auskristallisiert und idealerweise den Mahlbereich, in dem er mit den Kohlenstoffpartikeln vermahlen wird, mit einer Temperatur erreicht, die im oben genannten Temperaturbereich liegt.

Es hat sich als besonders günstig erwiesen, wenn das Injektionsgas im Anschluss an das Vermahlen der Kohlenstoffpartikel mit dem Schwefel vom Kohlenstoff-Schwefel-Komposit abgetrennt und ausgeschleust wird. Damit wird unmittelbar im Anschluss an das erste Vermahlen ein deutlich kühleres Ambiente geschaffen, in dem das nunmehrige Ziel des Abkühlens der Partikel ohne weitere Verklumpung wesentlich schneller erreicht werden kann. Generell lässt sich sagen, dass es günstig ist, wenn die Temperatur des Kohlenstoff-Schwefel-Komposits nach dem gemeinsamen, ersten Vermahlen absinkt.

Besonders günstig ist es, wenn das erste Vermahlen in einer Prallmühle und insbesondere in einer Stiftmühle erfolgt. In einer Prallmühle und insbesondere in einer Stiftmühle wird das Mahlgut nicht längere Zeit zusammengepresst oder von Mahlkörpern "überfahren" und verdichtet. Stattdessen beruht die Mahlwirkung darauf, dass die zu mahlenden Partikel mit hoher kinetischer Energie in der Mahlkammer umhergeschleudert und zertrümmert werden, wenn sie mit entsprechender Wucht untereinander oder mit den Stiften des Mahlwerks kollidieren. Das beugt erneuten, durch das Mahlen bedingten Verklumpungen vor.

Besonders günstig ist es, wenn auch das zweite Vermahlen in einer Prallmühle und insbesondere in einer Stiftmühle erfolgt. Selbst in den Fällen, in denen es bei diesem zweiten Vermahlen tendenziell eher um eine gute Durchmischung geht als um eine weitere Zerkleinerung, wirkt sich der Einsatz einer Prallmühle und insbesondere einer Stiftmühle besonders vorteilhaft aus. Denn auch hier macht sich die intensive Verwirbelung in der Mahlkammer sehr positiv bemerkbar, in einer sehr guten Durchmischung bei gleichzeitiger schneller Abkühlung.

Die Tatsache, dass hier nun das Mischen zugleich auch mit einem Mahlen einhergeht, ist ausgesprochen günstig, da der Tendenz der zunächst noch heißen Kompositpartikel entgegengewirkt wird, miteinander zu verklumpen. Sobald solche größeren Partikel durch Verklumpung entstehen, werden sie durch den Mahlprozess nach kürzester Zeit wieder zertrümmert.

Es ist besonders günstig, wenn drei separate Dosierungen für Schwefel, Kohlenstoffpartikel und PTFE vorgesehen sind. Diese sind vorzugsweise so eingestellt, dass das homogenisierte Gemisch 50 m% bis 70 m% Schwefel, 25 m% bis 40 m% Kohlenstoffpartikel (insbesondere in Gestalt von Ruß) und 1 m% bis 10 m% PTFE enthält.

Zumeist wird das homogenisierte Gemisch kontinuierlich im Durchlauf durch die Mühlen erzeugt und nicht chargenweise, durch mehrere aufeinanderfolgende Mühlenfüllungen. Auf diese Art und Weise lässt sich leichter eine chargenunabhängige, gleichbleibende Qualität produzieren, zumal wenn ein oder mehrere wesentliche Verfahrensparameter überwacht und nachgeführt werden.

Besonders günstig ist es, wenn die erste Vermahlung eine Heißgasvermahlung ist. Das leistet der Kompositbildung, also der Bildung des beschriebenen Kohlenstoff-Schwefelverbundes, im Rahmen des ersten Vermahlens Vorschub.

Im Idealfall dient die zweite Vermahlung wesentlich oder maßgeblich zur Kühlung des Endprodukts, das nach Abschluss des erfindungsgemäßen Verfahrens zur Verfügung steht. Dadurch, dass der Prozess ein Mahlprozess ist, wird verhindert, dass das Produkt auf dem Weg zum Abkühlen bis in einen Temperaturbereich hinein, in dem keine wesentliche Verklumpung mehr stattfindet, unerwünscht agglomeriert.

### FIGURENLISTE

Figur 1 zeigt die anlagenmäßige Ausgestaltung, die ein bevorzugtes Ausführungsbeispiel des erfindungsgemäßen Verfahrens erfordert.
Figur 2 illustriert die Stiftplatten einer Stiftmühle, wie sie hier bevorzugt zum Vermahlen zum Einsatz kommt.

### AUSFÜHRUNGSBEISPIEL

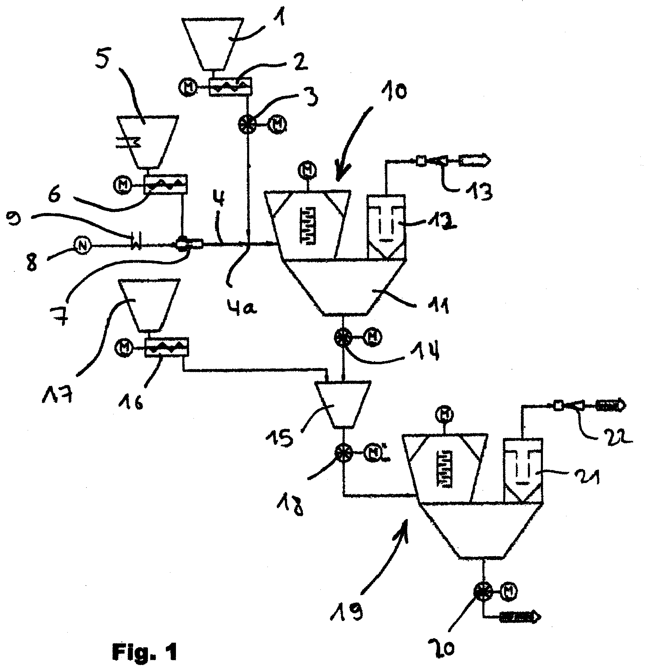

Die Figur 1 zeigt eine Anlage zur Durchführung des erfindungsgemäßen Verfahrens, das sich erfindungsgemäß eines 2-stufigen Mahlprozesses bedient. Ein 2-stufiger Mahlprozess hat den großen Vorteil, dass eine Klümpchenbildung des auskühlenden Schwefel/Ruß Komposits verhindert wird. Gleichzeitig führt der 2-stufige Mahlprozess dazu, dass das Endprodukt in der zweiten Mühle bzw. beim zweiten Mahldurchgang, wenn nur eine einzige Mühle zum Einsatz kommen sollte, gekühlt wird. Auf diese Art und Weise lässt sich mit der Verwendung eines 2-stufigen Mahlprozesses eine feine Homogenisierung mit dem PTFE-Pulver sicherstellen. Die Anlage zeichnet sich dadurch aus, dass sie den erfindungsgemäßen Prozess als kontinuierlichen Prozess betreibt. Anders als bisher, ist es nicht vorgesehen, chargenweise zu arbeiten, etwa mit Chargen, die durch das Volumen einer Mühlenfüllung vorgegeben werden. Das erhöht die Qualität. Die sonst typischen, von Charge zu Charge auftretenden Qualitätsschwankungen entfallen.

Bei dem homogenisierten Gemisch, das mit dem erfindungsgemäßen Verfahren hergestellt wird, handelt es sich um ein Gemisch aus Kohlenstoff, Schwefel und PTFE, wobei Letzteres auch als Polytetrafluorethylen bekannt ist. Der Kohlenstoff kommt zumeist in der Gestalt von Ruß zum Einsatz.

Gut zu erkennen in der Figur 1 ist der Kohlenstoffbunker bzw. Rußbunker 1. Aus ihm wird über den Dosierer bzw. die Dosierschnecke 2 gravimetrisch Ruß zudosiert. Vorzugsweise wird die Dosierung so eingestellt, dass der Ruß am fertigen homogenisierten Gemisch einen Anteil von etwa 25 m% bis 40 m%, d. h. Massenprozent, hat. Der Ruß gelangt bevorzugt unter dem Einfluss der Schwerkraft über die Zellenradschleuse 3 bis zu der sogleich noch näher zu erläuternden Mühlen-Zuleitung 4.

Ebenfalls gut zu erkennen in der Figur 1 ist der Schwefelbunker 5. Aus dem Schwefelbunker gelangt, wiederum vorzugsweise unter dem Einfluss der Schwerkraft, pulverförmiger Schwefel in den Dosierer bzw. die Dosierschnecke 6. Vorzugsweise wird die Dosierung so eingestellt, dass der Schwefel am fertigen homogenisierten Gemisch einen Anteil von etwa 50 m% bis 70 m% hat. Der Dosierer bzw. die Dosierschnecke 6 ist beheizt. Im Regelfall ist die Dosierschnecke zu diesem Zweck am Dosierrohr mit einem oder mehreren, bevorzugt temperaturgesteuerten oder temperaturgeregelten, Heizelementen bestückt. Die Heizelemente werden auf eine bestimmte Temperatur eingestellt, so dass der Schwefel während des Dosiervorgangs durch die Temperatureinwirkung seinen Zustand von pulverförmig in flüssig ändert. Der Schwefel verlässt den Dosierer daher in vollständig flüssigem Zustand.

Eine präzise Dosierung ist für eine stabile Produktqualität der späteren Batteriezelle wichtig. Daher muss gerade die Temperatursteuerung oder Temperaturregelung des Dosierrohres exakt sein. Denn der Schwefel legt ein besonderes Schmelz-Viskositätsverhalten an den Tag. Schwefel hat einen Schmelzpunkt von rund 119 °C. Zunächst bildet sich beim Schmelzen von Schwefel eine niedrigviskose Flüssigkeit. Bei weiterem Erhitzen nimmt die Viskosität zu, bis sie bei 187 °C das Maximum erreicht. Bei weiterem Erhitzen sinkt die Viskosität wieder ab. Um eine exakte Dosierung zu erreichen, muss daher die Temperatur des Schwefels sorgsam geführt werden.

Vorzugsweise unter dem Einfluss der Schwerkraft gelangt der Schwefel in einen Injektor 7.

Der Injektor 7 wird aus einem Gasvorrat 8 mit aufgeheiztem, unter Druck stehendem Injektorgas gespeist. Meist wird das Injektorgas vorgeheizt eingespeist, mit einer Temperatur von 100 °C bis 200 °C.

Bevorzugt kommt als Injektorgas Stickstoff zum Einsatz. Stickstoff hat den Vorteil, dass er auch unter Hitze nicht dazu neigt, mit dem Schwefel in nennenswertem Umfang Reaktionen einzugehen. Stattdessen könnte aber auch ein anderes Inertgas verwendet werden. Stickstoff ist aber aus Gründen der Prozesswirtschaftlichkeit klar bevorzugt.

Wie in Figur 1 angedeutet, ist zu diesem Zweck stromaufwärts des Injektors 7 ein Heizelement 9 vorgesehen, das das Injektorgas entsprechend temperiert. Das Injektorgas verlässt den Injektor 7 über die Mühlen-Zuleitung 4 und fließt in Richtung der ersten Mühle. Das Injektorgas ist dabei so temperiert, dass der Schwefel während des Transports im Injektorgas flüssig bleibt und nicht auskristallisiert. Der Druck des Injektorgases ist so gewählt, dass der Schwefel aus dem Injektor in die erste Mühle 10 transportiert wird. Bevor das mit dem Schwefel befrachtete Injektorgas die erste Mühle erreicht, wird der Ruß an der Rohrverschneidung 4a in die Mühlen-Zuleitung 4 eingespeist. Getragen von dem Injektorgas erreichen nun der flüssige Schwefel und der Ruß die erste Mühle 10 bzw. deren Mahlraum. Typischerweise handelt sich bei der ersten Mühle 10 um eine Prallmühle. Im Idealfall kommt eine sogenannte Stiftmühle zum Einsatz.

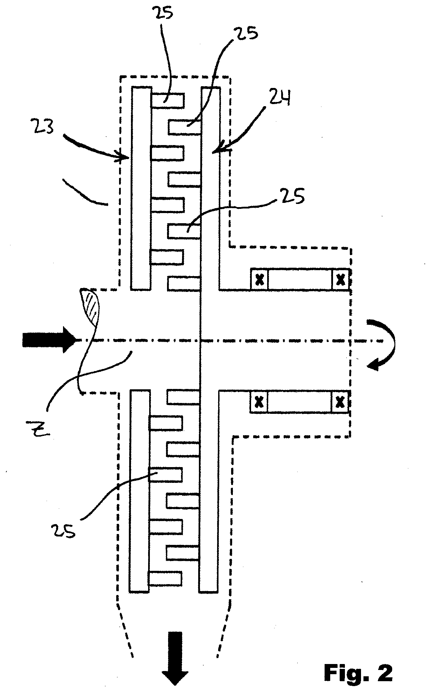

Bei einer Stiftmühle kommen als Mahlwerkzeuge Mahlscheiben zum Einsatz, die mit auf Abstand zueinander positionierten Stiften bestückt sind, so wie das die Figur 2 als bevorzugte Ausführungsform veranschaulicht. Im Regelfall kommen mindestens eine feststehende Stiftscheibe 23 und mindestens eine rotierende Stiftscheibe 24 zum Einsatz, wobei aber auch gegenläufig rotierende Stiftscheiben denkbar sind. Das zu vermahlende Material wird zumeist im unbestifteten Zentrum Z der Stiftscheiben 23, 24 bzw. bevorzugt der stationären Stiftscheibe eingespeist. Von dort aus wird es durch die Zentrifugalkraft nach außen geschleudert und dann meist auch nach außen abgegeben. Dabei erfolgt der Mahlvorgang durch den Prall mit den Stiften 25 und dem gegenseitigen Teilchenstoß.

Die rotierende Stiftscheibe ist im Regelfall drehzahlgesteuert oder drehzahlgeregelt. Je schneller die Stiftscheibe rotiert, desto feiner ist im Regelfall das Mahlergebnis.

Der Schwefel und der Ruß werden durch die Vermahlung fein verteilt und gut durchmischt. Dadurch, dass die Vermahlung in der ersten Mühle 10 im Heißgasbetrieb erfolgt, wird der flüssige Schwefel von den Poren des Rußes aufgesogen. Er geht mit diesem ein Komposit im oben beschriebenen Sinne ein.

Nach dem Ende der ersten Vermahlung fällt das Komposit aus Ruß und Schwefel in den Bunker 11 unterhalb der Mühle.

Wie man gut anhand der Figur 1 sieht, wird das Injektorgas bzw. im Regelfall der Stickstoff im Kreis gefahren. Das nach dem ersten Vermahlen überschüssige Injektorgas wird durch einen Filter 12 gereinigt und durch einen Injektor 13 aus der Mahlanlage geleitet. Bevorzugt wird es dann wieder dem Injektorgasvorrat 8 bzw. dem Stickstoffvorrat zugeschlagen, was hier nicht figürlich dargestellt ist. Angemerkt sei noch, dass der Austrag des Injektorgases auch durch ein hier nicht figürlich dargestelltes Gebläse realisiert werden kann.

Aus dem Bunker 11 fällt das Schwefel/Ruß Komposit in eine im Regelfall drehzahlgeregelte oder drehzahlgesteuerte Zellenradschleuse 14. Es wird von dort in einen Vorlagebehälter 15 entlassen. In diesen Vorlagebehälter 15 wird über einen Dosierer bzw. eine Dosierschnecke 16 rieselfähiges PTFE aus dem PTFE-Bunker 17 zudosiert. Das PTFE-Pulver fällt unter dem Einfluss der Schwerkraft in den Dosierer bzw. die Dosierschnecke 16. Von dort aus wird es in den Vorlagebehälter 15 gefördert.

Aus dem Vorlagebehälter 15 wird das Ruß/Schwefel/PTFE-Gemisch kontinuierlich über eine weitere drehzahlgeregelte oder drehzahlgesteuerte Zellenradschleuse 18 in eine zweite Prallmühle 19 geführt. Auch hier gilt, dass die Prallmühle 19 bevorzugt als Stiftmühle ausgeführt ist. Das oben Beschriebene gilt hier entsprechend.

Allerdings erfolgt in dieser zweiten Prallmühle keine Heißgasvermahlung. Stattdessen wird das Ruß/Schwefel-Gemisch mit dem PTFE nicht nur homogenisiert, sondern durch den Mahlprozess auch für die Weiterverarbeitung abgekühlt. Dadurch, dass das Abkühlen während dieses zweiten Vermahlungsschritts erfolgt, der zu einer sofortigen Zerschlagung sich eventuell beim Abkühlen bildender Schwefelklumpen führt, können beim Abkühlvorgang keine groben, harten Schwefelklumpen entstehen. Zusätzlich liegt das PTFE-Pulver gleichmäßig und fein verteilt vor.

Das Endprodukt in Gestalt des homogenisierten Gemischs aus Kohlenstoff, Schwefel und PTFE wird über eine weitere Zellenradschleuse 20 ausgetragen. Das überschüssige Prozessgas wird von dem Filter 21 gefiltert und durch einen weiteren Injektor 22 aus der Mahlanlage ausgetragen. Alternativ kann auch ein Vakuumgebläse zum Austrag eingesetzt werden.

### BEZUGSZEICHENLISTE

- 1: Rußbunker
- 2: Dosierschnecke für den Ruß
- 3: Zellenradschleuse für den Ruß
- 4: Mühlen-Zuleitung
- 4a: Rohrverschneidung zur Einspeisung des Rußes in die Mühlen-Zuleitung
- 5: Schwefelbunker
- 6: Dosierschnecke, beheizt, für den Schwefel
- 7: Injektor
- 8: Injektorgasvorrat
- 9: Heizelemente für das Injektionsgas
- 10: erste Mühle
- 11: Bunker unterhalb der ersten Mühle, für das Schwefel/Ruß Komposit
- 12: Filter
- 13: Injektor
- 14: Zellenradschleuse für Schwefel/Ruß Komposit
- 15: Vorlagebehälter
- 16: Dosierschnecke für pulverförmiges PTFE
- 17: PTFE-Bunker
- 18: Zellenradschleuse für die Mischung aus Schwefel/Ruß und PTFE
- 19: zweite Prallmühle
- 20: weitere Zellenradschleuse
- 21: weiterer Filter
- 22: weiterer Injektor
- 23: Stiftscheibe (oft stationär)
- 24: Stiftscheibe (rotierend)
- 25: Stift bzw. Prallstift einer Stiftscheibe

- Z: Zentrum der Stiftscheiben

## Patentansprüche

1. Verfahren zur Herstellung eines homogenisierten Gemischs aus Kohlenstoff, Schwefel und PTFE, **dadurch kennzeichnet, dass** der Schwefel verflüssigt wird und dann der flüssige Schwefel zusammen mit dem Kohlenstoff ein erstes Mal vermahlen wird, so dass der flüssige Schwefel von den Poren der Kohlenstoffpartikel aufgesogen wird und mit den Kohlenstoffpartikeln ein bevorzugt pulverförmiges Komposit bildet, woraufhin PTFE zugegeben und dann das Gemisch aus dem Komposit und dem PTFE ein zweites Mal vermahlen und dadurch homogenisiert wird.

2. Verfahren nach Anspruch 1, **dadurch gekennzeichnet, dass** Kohlenstoffpartikel in Gestalt von Ruß zum Einsatz kommen.

3. Verfahren nach einem der vorhergehenden Ansprüche, **dadurch gekennzeichnet, dass** der flüssige Schwefel einem Injektor (7) zugeführt wird, der diesen in eine Mühle injiziert.

4. Verfahren nach einem der vorhergehenden Ansprüche, **dadurch gekennzeichnet, dass** der flüssige Schwefel bis zu seinem Vermahlen mit den Kohlenstoffpartikeln in einem Temperaturbereich zwischen 119 °C und 220 °C, besser nur 200 °C und idealerweise nur 190 °C geführt wird.

5. Verfahren nach einem der vorhergehenden Ansprüche, **dadurch gekennzeichnet, dass** der Injektor (7) mit unter Überdruck stehendem Injektionsgas, insbesondere in Gestalt von Stickstoff, betrieben wird.

6. Verfahren nach Anspruch 3 oder Anspruch 4 bzw. Anspruch 5 in Verbindung mit Anspruch 3, **dadurch gekennzeichnet, dass** das Injektionsgas so aufgeheizt ist, dass der Schwefel während des Transports im Stickstoff flüssig bleibt, nicht auskristallisiert, und idealerweise den Mahlbereich, in dem er mit den Kohlenstoffpartikeln vermahlen wird, mit einer Temperatur erreicht, die im von Anspruch 4 genannten Temperaturbereich liegt.

7. Verfahren nach Anspruch 5 oder Anspruch 6 in Verbindung mit Anspruch 5, **dadurch gekennzeichnet, dass** das Injektionsgas im Anschluss an das Vermahlen der Kohlenstoffpartikel mit dem Schwefel vom Kohlenstoff-Schwefel-Komposit abgetrennt und ausgeschleust wird.

8. Verfahren nach einem der vorhergehenden Ansprüche, **dadurch gekennzeichnet, dass** die Temperatur des Kohlenstoff-Schwefel-Verbunds nach dem gemeinsamen Vermahlen absinkt.

9. Verfahren nach einem der vorhergehenden Ansprüche, **dadurch gekennzeichnet, dass** das erste Vermahlen in einer Prallmühle und insbesondere in einer Stiftmühle erfolgt.

10. Verfahren nach einem der vorhergehenden Ansprüche, **dadurch gekennzeichnet, dass** das zweite Vermahlen in einer Prallmühle und insbesondere in einer Stiftmühle erfolgt.

11. Verfahren nach einem der vorhergehenden Ansprüche, **dadurch gekennzeichnet, dass** drei separate Dosierungen (2, 6, 16) für Schwefel, Kohlenstoffpartikel und PTFE verwendet werden, die vorzugsweise so eingestellt sind, dass das homogenisierte Gemisch 50 m% bis 70 m% Schwefel, 25 m% bis 40 m% Kohlenstoffpartikel und insbesondere Ruß und 1 m% bis 10 m% PTFE enthält.

12. Verfahren nach einem der vorhergehenden Ansprüche, **dadurch gekennzeichnet, dass** das homogenisierte Gemisch kontinuierlich im Durchlauf durch die Mühlen (10, 19) erzeugt wird und nicht chargenweise, durch mehrere aufeinanderfolgende Mühlenfüllungen.

13. Verfahren nach einem der vorhergehenden Ansprüche, **dadurch gekennzeichnet, dass** die erste Vermahlung eine Heißgasvermahlung ist.

14. Verfahren nach einem der vorhergehenden Ansprüche, **dadurch gekennzeichnet**, die zweite Vermahlung zur Kühlung des Endprodukts dient.

15. Vorrichtung zur Durchführung eines Verfahrens nach einem der vorhergehenden Ansprüche mit zwei in Gemisch-Transportrichtung hintereinander angeordneten Prallmühlen von denen eine bevorzugt im Heißgasbetrieb betrieben wird.

16. Verwendung einer Stiftmühle zum Heißgasvermahlen von flüssigem Schwefel und Ruß.

17. Verwendung einer Stiftmühle zum Abkühlen und Homogenisieren einer Mischung aus einem Ruß/Schwefel Verbund und PTFE.

18. Verwendung einer ersten Stiftmühle nach Anspruch 16 und dieser nachfolgenden Verwendung einer zweiten Stiftmühle nach Anspruch 17 bevorzugt im Rahmen eines kontinuierlichen Prozesses.
